# EUROPÄISCHE PATENTANMELDUNG

(11) **EP 2 256 316 A1**
(43) Veröffentlichungstag der Anmeldung: **01.12.2010**
(21) Anmeldenummer: 09161355.4
(22) Anmeldetag: 28.05.2009
(51) Int. Cl.: F02C 6/14, F02C 6/18, F02C 7/047, F02C 7/08, F02C 7/143

(54) **Ansauglufttemperiereinrichtung sowie ein Verfahren zum Betrieb einer Ansauglufttemperiereinrichtung**

(71) Anmelder: Siemens Aktiengesellschaft, 80333 München (DE)
(72) Erfinder: Schmid, Erich, 91080, Marloffstein (DE); Hofmann, Daniel, 91080, Uttenreuth (DE); Schöttler, Michael, 91052, Erlangen (DE)

(57) **Zusammenfassung**

Die Erfindung betrifft Eine Ansauglufttemperiereinrichtung (18) umfassend einen einerseits in eine Ansaugluftleitung (6) geschalteten Wärmetauscher (12), der andererseits in einen Kreislauf (13) eines Ansaugluft-Vorwärmsystems (2) geschaltet ist, wobei ein Speicher (19) für ein Fluid zur Wärmeübertragung mit dem Kreislauf (13) thermisch verbindbar ist. Die Erfindung betrifft ferner ein Verfahren zum Betrieb einer Ansauglufttemperiereinrichtung (18).

## Beschreibung

Die Erfindung betrifft eine Ansauglufttemperiereinrichtung, insbesondere für eine Gas- und Dampfturbinenanlage, und ein Verfahren zum Betrieb einer solchen Einrichtung und bezieht sich insbesondere auf einen verbesserten Spitzenlastbetrieb einer Gas- und Dampfturbinenanlage.

Es ist bekannt, dass die Leistung von Gas- und Dampfturbinenanlagen u.a. von der Ansauglufttemperatur der Gasturbine abhängig ist und dass bei hoher Umgebungstemperatur eine geringere Leistung erzeugt wird. In heißen Ländern gibt es abhängig von der Tageszeit Spitzen im Stromverbrauch, die u.a. durch den erhöhten Strombedarf für Kühlaggregate verursacht werden. Dieser hohe Verbrauch führt in Strommärkten mit Preisbildung entsprechend Angebot und Nachfrage vor allem nachmittags zu hohen Strompreisen. In der Nacht wäre zwar eine höhere Leistung der Gas- und Dampfturbinenanlage möglich, aber sowohl der Strombedarf als auch der Strompreis sind üblicherweise gering.

Um diesem Problem zu begegnen kann beispielsweise zu Spitzenlastzeiten die Ansaugluft durch Verdunstungskühlung vor der Gasturbine gekühlt werden. Die Wirksamkeit dieses Verfahrens hängt jedoch von der Luftfeuchte ab und führt nur zu einer begrenzten Leistungssteigerung. Nachteilig sind auch der hiermit verbundene Wasserbedarf bzw. die Wasserverluste.

Alternativ kann die Leistungseinbuße infolge hoher Umgebungstemperaturen bei der Gasturbine durch eine Abhitzedampferzeuger-Zusatzfeuerung kompensiert werden. Die Nachteile dieser Lösung liegen in den zusätzlichen Herstellkosten, der Wirkungsgrad-Reduzierung und der Überdimensionierung des Wasser-Dampf-Kreislaufs, der Dampfturbine und, falls keine Einwellen-Anlage vorliegt, des Dampfturbinen-Generators.

Grundsätzlich können Leistungseinbußen natürlich durch den Einsatz von Reserveleistung ausgeglichen werden. Zusätzliche Gas- und Dampfturbinenanlage und -Aggregate führen jedoch zu hohen Kosten bei vergleichsweise geringer Einsatzdauer.

Schließlich kann die Ansaugluft der Gasturbine durch konventionelle Kältemaschinen gekühlt werden. Die Kältemaschinen verbrauchen jedoch selbst viel Strom. Das Verfahren führt zu keiner merklichen Leistungssteigerung.

Aufgabe der Erfindung ist es, den Spitzenlastbetrieb einer Gasturbinenanlage, insbesondere einer Gas- und Dampfturbinenanlage, so zu verbessern, dass eine hohe Leistung bei hohem Wirkungsgrad erzielt wird.

Erfindungsgemäß wird diese Aufgabe gelöst durch die Vorrichtung gemäß Anspruch 1 und das Verfahren gemäß Anspruch 11. Vorteilhafte Weiterbildungen der Erfindung sind in den jeweiligen abhängigen Ansprüchen definiert.

Indem bei einer Ansauglufttemperiereinrichtung umfassend einen einerseits in eine Ansaugluftleitung geschalteten Wärmetauscher, der andererseits in einen Kreislauf eines Ansaugluft-Vorwärmsystems geschaltet ist, ein Speicher für ein Fluid zur Wärmeübertragung mit dem Kreislauf thermisch verbindbar ist, wird folgendes erreicht:

Das Ansaugluft-Vorwärm-System (Air Preheater System = APH) ist in derzeitigen und künftigen Gas- und Dampfturbinenanlagen wegen der Teillastabsenkung nachts und am Wochenende (CO-Problematik) in vielen Anlagen schon vorhanden. Über den Speicher wird nun ein Fluid zur Verfügung gestellt, mit dem die Temperatur der Ansaugluft über das bereits bestehende Ansaugluft-Vorwärm-System beeinflusst werden kann. Dabei kann das Ansaugluft-Vorwärm-System in der gleichen Weise wie die Luft vorzuwärmen auch zum Kühlen genutzt werden.

Vorteilhafter Weise ist der Speicher mit dem Kreislauf thermisch verbindbar, indem eine erste Fluidleitung vom Speicher abzweigt und in den Kreislauf mündet und eine zweite Fluidleitung vom Kreislauf abzweigt und in den Speicher mündet.
Das Fluid wird hierbei direkt in das Ansaugluft-Vorwärmsystem gegeben und kann über den Wärmetauscher des Ansaugluft-Vorwärmsystems die Temperatur der Ansaugluft für eine Gasturbine beeinflussen.

Alternativ ist ein Wärmetauscher in den Kreislauf geschaltet und über eine erste und eine zweite Fluidleitung mit dem Speicher verbunden. In diesem Fall bildet das Fluid mit Speicher und Wärmetauscher einen eigenen Kreislauf und der Kreislauf des Ansaugluft-Vorwärmsystems bleibt unverändert.

Das vom Wärmetausch mit der Ansaugluft erwärmte Fluid kann zweckmäßigerweise wieder abgekühlt werden, indem ein Luft-Fluid-Wärmetauscher einerseits in einen Speicher-Kreislauf und andererseits in eine von einem Verdichter abzweigende Luftleitung geschaltet ist, wobei der Speicher-Kreislauf den Speicher, eine zwischen die erste und die zweite Fluidleitung geschaltete dritte Fluidleitung, sowie Abschnitte der ersten und der zweiten Fluidleitung vom Speicher bis zur dritten Fluidleitung umfasst.

Zu diesem Zweck wird vorteilhafter Weise mindestens ein weiterer Wärmetauscher zur Abkühlung der Luft in die vom Verdichter abzweigende Luftleitung in Strömungsrichtung der Luft primärseitig vor den Luft-Fluid-Wärmetauscher geschaltet. Der weitere Wärmetauscher kann beispielsweise in den Wasser-Dampf-Kreislauf einer Gas- und Dampfturbinenanlage geschaltet sein und zum Aufwärmen von Speisewasser verwendet werden.

Zur weiteren Abkühlung der Verdichterluft ist vorteilhafterweise ein Druckreduzierventil zwischen den weiteren Wärmetauscher und den Luft-Fluid-Wärmetauscher in die Luftleitung geschaltet.

Alternativ kann vorteilhafter Weise eine Luftentspannungsturbine zwischen den weiteren Wärmetauscher und den Luft-Fluid-Wärmetauscher in die Luftleitung geschaltet sein.

In einer vorteilhaften Ausführungsform der Erfindung ist das Fluid zur Wärmeübertragung ein Gemisch aus Wasser und Gefrierschutzmittel (z. B. Glycol oder Ethanol). Durch einen großen Wärmeübergangskoeffizienten und die Absenkung des Gefrierpunktes des Wassers durch das Gefrierschutzmittel ist ein Gemisch aus Wasser und Gefrierschutzmittel für eine solche Anwendung besonders geeignet.

Vorteilhafter Weise ist die Ansauglufttemperiereinrichtung Teil einer Gasturbinenanlage oder einer Gas- und Dampfturbinenanlage.

Im erfinderischen Verfahren zum Betrieb einer Ansauglufttemperiereinrichtung mit einem Ansaugluft-Vorwärmsystem, wird ein Fluid zur Wärmeübertragung aus einem Speicher ausgespeichert und dem Ansaugluft-Vorwärmsystem zur Änderung der Temperatur einer Ansaugluft zugeführt.

Zur Regeneration des Fluids wird vorteilhafter Weise Verdichterluft verwendet, die selbst zuvor abgekühlt werden muss.
Dabei ist es vorteilhaft, wenn komprimierte Verdichterluft im Wärmetausch mit Wasser, beispielsweise Mitteldruck- oder Niederdruckspeisewasser eines Wasser-Dampf-Kreislaufs einer Gas-und Dampfturbinenanlage, abgekühlt wird.

Weiterhin ist es vorteilhaft, wenn zur weiteren Abkühlung eine Drossel die abgekühlte Verdichterluft entspannt.

Alternativ kann es auch zweckmäßig sein, die Verdichterluft in einer Entspannungsturbine zu entspannen.

Für die erfindungsgemäße Vorrichtung bzw. das erfindungsgemäße Verfahren sind an einer Gas- und Dampfturbinenanlage mit ohnehin vorhandenem Ansaugluft-Vorwärmsystem nur geringe Modifikationen mit einem zusätzlichen Wärmetauscher erforderlich, je nachdem ob das Fluid zur Wärmeübertragung direkt in das Ansaugluft-Vorwärmsystem oder über einen Wärmetauscher eingebunden wird.

Weiterhin sind in der Nachtzeit in der Regel der Stormbedarf und auch der Stromerlös am geringsten. Zur Auslastung der Gas- und Dampfturbinenanlage kann nun ein Teil der erzeugten Energie beispielsweise in kaltes Fluid umgewandelt und gespeichert werden, das tagsüber bei hohem Stromerlös für zusätzliche Leistungsabgabe sorgt. Damit wird die Gas- und Dampfturbinenanlage einem Speicherkraftwerk ähnlich, welches bei geringen Strompreisen Strom verbraucht und bei hohem Stromerlös zusätzlichen Strom erzeugen kann, ohne dabei die Nominalleistung zu ändern. Je nach Auslegung der Systeme bewirkt die Abkühlung der Ansaugluft z.B. von ca. +40°C auf +10°C eine Leistungssteigerung um 15-20%.

Der apparatetechnische Aufwand ist geringer als bei einer Lösung mit konventionellen Kältemaschinen und auch der Wirkungsgrad des Systems (insbesondere mit Entspannungsturbine) liegt merklich höher. Das meist ohnehin notwendige Ansaugluft-Vorwärmsystem wird neben den bisherigen Aufgaben (CO-Vermeidung bei Teillast, Schwachlast) zusätzlich für die Kühlung bei hohen Außentemperaturen genutzt und kann damit wesentlich wirtschaftlicher eingesetzt werden.

Die Vorrichtung kann auch im Winter bzw. allgemein bei tiefen Umgebungstemperaturen durch Heißwasserspeicherung den Bedarf an Hilfsdampf für den sogenannten Anti-Icing-Betrieb der Gasturbine beträchtlich reduzieren, wobei der Speicher ebenfalls über das Ansaugluft-Vorwärmsystem entladen wird. Eine Kombination von geringen Außentemperaturen und hohen relativen Luftfeuchtewerten hat nämlich ein stark erhöhtes Vereisungsrisiko für das Ansaugsystem und die gesamte Gasturbine zur Folge. Zu den Risiken zählt das Vereisen der Filter und das daraus resultierende Reduzieren oder Blockieren der Luftzufuhr. Ersteres führt zu reduzierter Leistung, Letzteres bedeutet Stillstand der Anlage. Weitaus problematischer sind aber Eiskristalle oder Tropfen, die in die Turbine eindringen und in Kontakt mit den Schaufelrädern der Turbine treten. Das heißt im günstigen Fall erhöhten Verschleiß, im ungünstigeren Fall die vorzeitige Zerstörung der Anlage. Daher ist es technisch und wirtschaftlich von größter Bedeutung eine Vereisung wirkungsvoll zu verhindern. Der Zusatz von Gefrierschutzmittel verhindert ein Gefrieren des Wassers beim Wärmetausch mit kalter Ansaugluft. Die für das Aufheizen des Gemischs aus Wasser und Gefrierschutzmittel erforderliche Wärme wird beispielsweise aus den Dampfsystemen des Wasser-Dampf-Kreislaufes einer Gas- und Dampfturbinenanlage entnommen.

Neben der Verwendung im Anti-Icing-Betrieb kann mit Hilfe des gespeicherten Heißwassers außerdem der Anlagenwirkungsgrad bei Teillastbetrieb beträchtlich gesteigert werden.

Auch die Heizung und Kühlung von Gebäuden und Raumeinheiten kann mit Hilfe des Kalt- bzw. Heißwasserspeichers in einfacher Weise erfolgen. Je nach Gestaltung und Fahrweise des Speichers kann dabei auch parallel gekühlt und geheizt werden falls notwendig.

Die Erfindung wird beispielhaft anhand der Zeichnungen näher erläutert. Es zeigen schematisch und nicht maßstäblich:
- Figur 1: eine Gasturbinenanlage und ein derzeitiges Gastur- binen-Ansaugluft-Vorwärmsystem,
- Figur 2: eine Ansauglufttemperiereinrichtung mit direkter thermischer Kopplung durch Einspeisung des Fluids aus dem Speicher in das Ansaugluft-Vorwärmsystem,
- Figur 3: eine Ansauglufttemperiereinrichtung mit indirekter thermischer Kopplung über einen Wärmetauscher,
- Figur 4: die Erzeugung von kaltem Fluid mit Drosselventil in der Verdichterluftleitung,
- Figur 5: die Erzeugung von kaltem Fluid mit Entspannungstur- bine in der Verdichterluftleitung,
- Figur 6: die Einbindung der Erzeugung von kaltem Fluid in den Wasser-Dampf-Kreislauf einer Gas- und Dampftur- binenanlage und
- Figur 7: die Nutzung des Speichers der Ansauglufttemperier- einrichtung als Wärmespeicher.

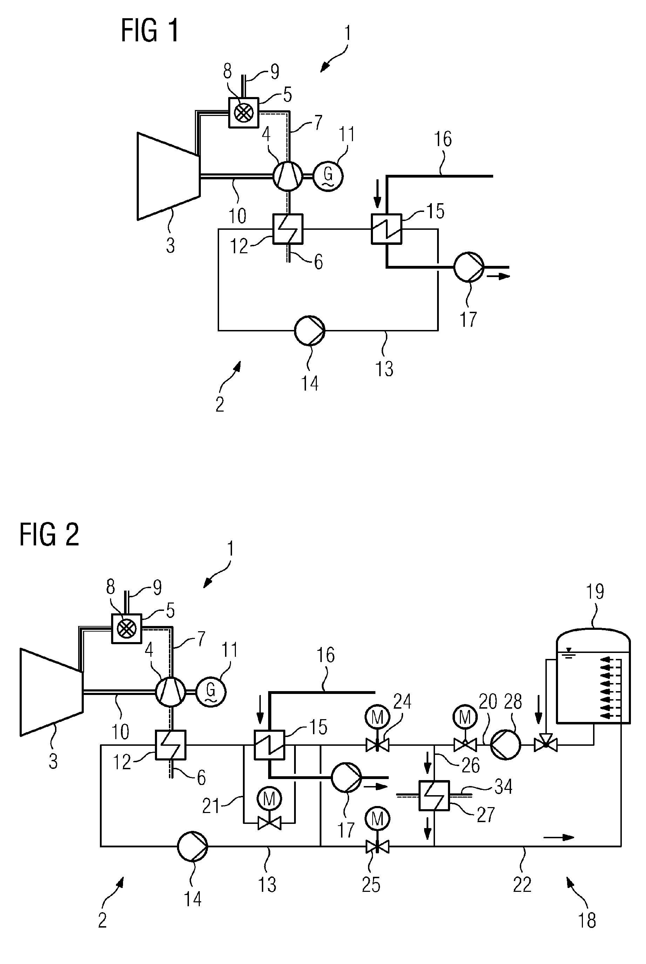

Die Figur 1 zeigt schematisch und beispielhaft eine Gasturbinenanlage 1 und ein derzeitiges Gasturbinen-Ansaugluft-Vorwärmsystem 2 einer Gas- und Dampfturbinenanlage. Die Gasturbinenanlage 1 ist mit einer Gasturbine 3, einem Verdichter 4 sowie wenigstens einer zwischen den Verdichter 4 und die Gasturbine 3 geschalteten Brennkammer 5 ausgestattet. Mittels des Verdichters 4 wird über die Ansaugluftleitung 6 Frischluft angesaugt, verdichtet und über die Frischluftleitung 7 einem oder mehreren Brennern 8 der Brennkammer 5 zugeführt. Die zugeführte Luft wird mit über eine Brennstoffleitung 9 zugeführtem flüssigem oder gasförmigem Brennstoff gemischt und das Gemisch entzündet. Die dabei entstehenden Verbrennungsabgase bilden das Arbeitsmedium der Gasturbinenanlage 1, welches der Gasturbine 3 zugeführt wird, wo es unter Entspannung Arbeit leistet und eine mit der Gasturbine 3 gekoppelte Welle 10 antreibt. Die Welle 10 ist außer mit der Gasturbine 3 auch mit dem Luftverdichter 4 sowie einem Generator 11 gekoppelt, um diese anzutreiben.

Durch die Vorwärmung der Ansaugluft verringert sich der der Gasturbine 3 insgesamt pro Zeiteinheit zuführbare Gesamtmassenstrom an Brennstoff-Luft-Gemisch, so dass die durch die Gasturbinenanlage 1 maximal erreichbare Leistungsabgabe geringer ist als beim Verzicht auf die Vorwärmung der Ansaugluft. Allerdings sinkt bei der Vorwärmung der Ansaugluft durch Zuführung der Wärme der Brennstoffverbrauch stärker als die maximal erreichbare Leistungsabgabe, so dass der Gesamtwirkungsgrad steigt.

Das Ansaugluft-Vorwärmsystem 2 besteht aus einem einerseits in die Ansaugluftleitung 6 geschalteten Wärmetauscher 12, der andererseits in einen Kreislauf 13 des Ansaugluft-Vorwärmsystems 2 geschaltet ist, in dem ein Fluid von einer Umwälzpumpe 14 umgepumpt wird. Ein weiterer, sekundärseitig in den Kreislauf 13 geschalteter Wärmetauscher 15 ist primärseitig in einen Wasser-Dampf-Kreislauf 16 mit Pumpe 17 geschaltet. Ein durch den weiteren Wärmetauscher 15 strömender Dampf erwärmt das umlaufende Fluid und kondensiert dabei. Das so entstehende Kondensat wird über die Pumpe 17 abtransportiert. Das erwärmte Fluid wiederum gibt die aufgenommene Wärme im Wärmetauscher 12 an die Ansaugluft in der Ansaugluftleitung 6 ab.

Figur 2 zeigt eine Ansauglufttemperiereinrichtung 18 gemäß einer ersten Ausführungsform der Erfindung mit direkter Einspeisung eines kalten Fluids in das Ansaugluft-Vorwärmsystem 2. Das Fluid kann beispielsweise Wasser, ein Gefrierschutzmittel oder auch eine Gemisch aus Wasser und Gefrierschutzmittel sein. Hierbei wird aus einem Speicher 19 über eine erste Fluidleitung 20 das kalte Fluid direkt in das Ansaugluft-Vorwärmsystem 2 eingespeist. Das kalte Fluid strömt durch einen Bypass 21 am Wärmetauscher 15 vorbei, der üblicherweise das Fluid des Ansaugluft-Vorwärmsystems 2 aufheizt, und gelangt zum Wärmetauscher 12, der in die Ansaugluftleitung 6 geschaltet ist. Dort nimmt das kalte Fluid Wärme aus der Ansaugluft auf, kühlt diese dabei ab und wird anschließend über eine zweite Fluidleitung 22 wieder in den Speicher 19 zurück gepumpt. Mit den Ventilen 24 und 25 kann der Speicher 19 bedarfsweise vom Ansaugluft-Vorwärmsystem 2 abgekoppelt werden.

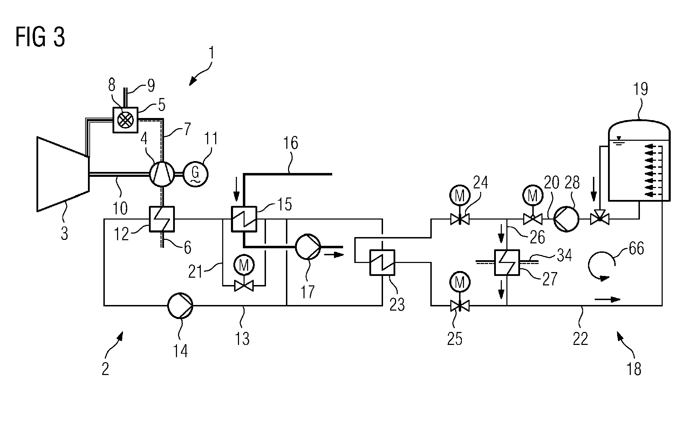

Figur 3 zeigt eine Ansauglufttemperiereinrichtung 18 gemäß einer zweiten Ausführungsform der Erfindung mit indirekter Kühlung des im Ansaugluft-Vorwärmsystem 2 umlaufenden Fluids.

Dabei wird ein Wärmetauscher 23 einerseits in den Kreislauf 13 des Ansaugluft-Vorwärmsystems 2 und andererseits zwischen die erste 20 und zweite Fluidleitung 22 geschaltet.

Zum Laden des Speichers 19 werden die Ventile 24, 25 in der ersten 20 und der zweiten Fluidleitung 22 geschlossen. Eine dritte Fluidleitung 26 verbindet die erste Fluidleitung 20 mit der zweiten Fluidleitung 22 und führt über einen Wärmetauscher 27, durch den sekundärseitig kalte Luft strömt. Eine Pumpe 28 sorgt für eine kontinuierliche Umwälzung und weitere Abkühlung des Fluids im Kreislauf 66. Das abgekühlte Fluid mit z.B. bis zu -40°C wird im Speicher 19 gelagert. Dieser Tagesbehälter kann je nach Auslegung z.B. bis zu 1000m3 aufnehmen.

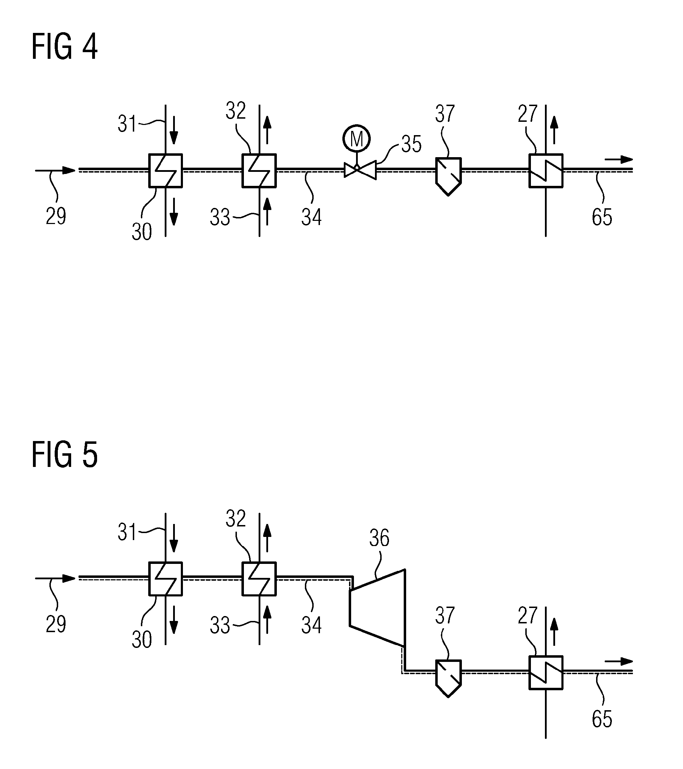

Die Figuren 4 und 5 zeigen, wie die kalte Luft für das Kühlen des Fluids erzeugt wird. Heiße Druckluft 29 vom Gasturbinen-Verdichter 4 wird im Wärmetausch mit Wasser aus dem Wasser-Dampf-Kreislauf abgekühlt, wobei gleichzeitig im Abhitzedampferzeuger die Dampfproduktion steigt. In den Figuren 4 und 5 sind hierzu ein Wärmetauscher 30 für Mitteldruck-Speisewasser 31 und ein Wärmetauscher 32 für Kondensat 33 in die Verdichterluftleitung 34 geschaltet.

Eine Drossel 35, wie in Figur 4 gezeigt, oder eine Entspannungsturbine 36, wie in Figur 5 gezeigt, entspannen die abgekühlte Luft auf Umgebungsdruck, wobei die Lufttemperatur weiter absinkt. Anfallendes Wasser beziehungsweise Eis werden in einem Wasser-Eis-Abscheider 37 von der abgekühlten Luft abgetrennt.

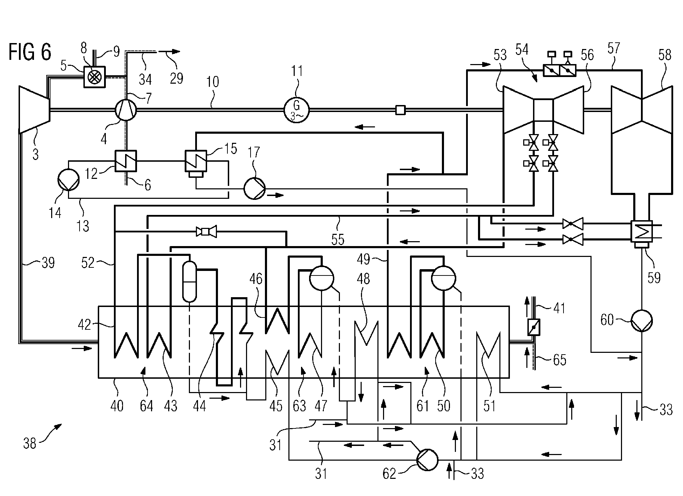

Diese Kaltluft kühlt über den aus den Figuren 2 und 3 bekannten Wärmetauscher 27 das Fluid und wird anschließend einem Kamin 41 (s. Fig. 6) zugeführt 65. Alternativ kann die Kaltluft auch in einem Kühlkreislauf zur Generator-Kühlung oder im Kondensator verwendet werden.

Bei einer anderen Lösung könnte die Kälteerzeugung auch mit konventionellen Kältemaschinen erfolgen.

Figur 6 zeigt eine Gas- und Dampfturbinenanlage 38. An die Beschreibung der Figur 1 anknüpfend, werden die heißen Abgase der Gasturbinenanlage 1 durch die Abgasleitung 39 dem Abhitzedampferzeuger 40 zugeführt und durchströmen diesen, bis sie durch einen Kamin 41 in die Umgebung gelangen. Auf ihrem Weg durch den Abhitzedampferzeuger 40 führen sie ihre Wärme einem Hochdrucküberhitzer 42 zu, dann einem Hochdruckzwischenüberhitzer 43, einem Hochdruckverdampfer 44, einem Hochdruckvorwärmer 45, dann einem Mitteldrucküberhitzer 46, einem Mitteldruckverdampfer 47, einem Mitteldruckvorwärmer 48, dann einem Niederdrucküberhitzer 49, einem Niederdruckverdampfer 50 und schließlich einen Kondensatvorwärmer 51.

Im Hochdrucküberhitzer 42 überhitzter Dampf wird durch eine Dampfableitung 52 einer Hochdruckstufe 53 der Dampfturbine 54 zugeführt und dort unter Leistung von Arbeit entspannt. Mit der Arbeit werden, analog zur in der Gasturbine geleisteten Arbeit, die Welle 10 und damit der Generator 11 zur Erzeugung elektrischer Energie bewegt. Der in der Hochdruckstufe 53 teilweise entspannte heiße Dampf wird anschließend dem Hochdruckzwischenüberhitzer 43 zugeführt, dort erneut erhitzt und über eine Ableitung 55 beziehungsweise eine Dampfzuleitung einer Mitteldruckstufe 56 der Dampfturbine 54 zugeführt und dort unter Leistung von mechanischer Arbeit entspannt. Der dort teilweise entspannte Dampf wird über eine Zuleitung 57 zusammen mit dem Niederdruckdampf aus dem Niederdrucküberhitzer 49 einer Niederdruckstufe 58 der Dampfturbine 54 zugeführt und dort unter Abgabe von mechanischer Energie weiter entspannt.

Der entspannte Dampf wird im Kondensator 59 kondensiert, und das so entstehende Kondensat wird über eine Kondensatpumpe 60 direkt einer Niederdruckstufe 61 des Abhitzedampferzeugers 40 oder über eine Zuführpumpe 62, und von dieser mit entsprechendem Druck versehen, einer Mitteldruckstufe 63 oder einer Hochdruckstufe 64 des Abhitzedampferzeugers 40 zugeführt, wo das Kondensat verdampft wird. Nach einer Dampfableitung und Überhitzung wird der Dampf über die entsprechenden Ableitungen des Abhitzedampferzeugers 40 wieder der Dampfturbine 54 zu Entspannung und Verrichtung mechanischer Arbeit zugeführt.

Zur Einbindung der Kälteerzeugung in den Wasser-Dampf-Kreislauf der Gas- und Dampfturbinenanlage 38 wird, wie bereits in den Figuren 4 und 5 beschrieben, heiße Druckluft 29 vom Gasturbinen-Verdichter 4 abgezweigt, im Wärmetausch mit Mitteldruck-Speisewasser 31 und Kondensat 33 abgekühlt und am Ende des Prozesses der Abkühlung des Fluids in den Kamin 41 zurückgeleitet 65.

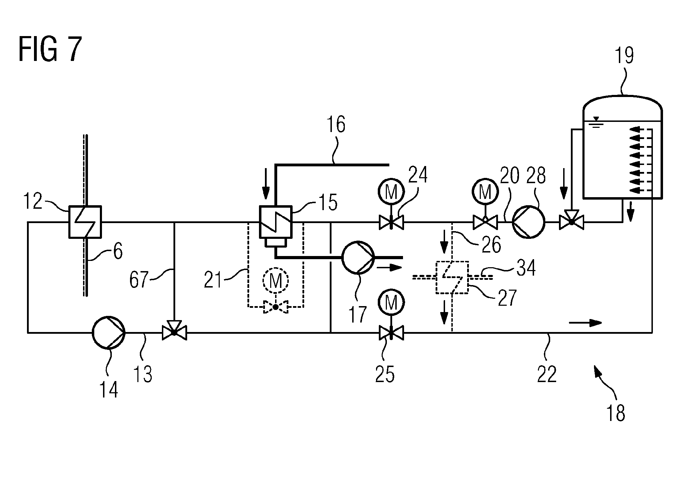

Figur 7 zeigt die alternative Nutzung des Speichers 19 als Wärmespeicher. Das Fluid, das im Speicher 19 gespeichert ist, wird von einer Pumpe 28 in das Ansaugluft-Vorwärmsystem 2 gepumpt. Die Leitung 26 über den Luft-Fluid-Wärmetauscher 27 und die Bypass-Leitung 21 sind hierbei geschlossen. Das Aufwärmen des Fluids erfolgt im Wärmetauscher 15 mit Dampf aus dem Wasser-Dampf-Kreislauf 16 der Gas- und Dampfturbinenanlage 38. Das aufgewärmte Fluid wird anschließend nicht über den Wärmetauscher 12 geführt, sondern direkt über die Leitung 67 zurück in den Speicher 19 geleitet.

Zum Ausspeichern der Wärme, d.h. zum Aufwärmen der Ansaugluft, wird das Fluid aus dem Speicher 19 in das Ansaugluft-Vorwärmsystem 2 gepumpt und durch den in den Figuren 1 bis 3 gezeigten Ansaugluft-Wärmetauscher 12 geführt.

## Patentansprüche

1. Eine Ansauglufttemperiereinrichtung (18) umfassend einen einerseits in eine Ansaugluftleitung (6) geschalteten Wärmetauscher (12), der andererseits in einen Kreislauf (13) eines Ansaugluft-Vorwärmsystems (2) geschaltet ist, **dadurch gekennzeichnet, dass** ein Speicher (19) für ein Fluid zur Wärmeübertragung mit dem Kreislauf (13) thermisch verbindbar ist.

2. Die Ansauglufttemperiereinrichtung (18) nach Anspruch 1, wobei der Speicher (19) **dadurch** mit dem Kreislauf (13) thermisch verbindbar ist, dass eine erste Fluidleitung (20) vom Speicher (19) abzweigt und in den Kreislauf (13) mündet und eine zweite Fluidleitung (22) vom Kreislauf (13) abzweigt und in den Speicher (19) mündet.

3. Die Ansauglufttemperiereinrichtung (18) nach Anspruch 1, wobei ein Wärmetauscher (23) in den Kreislauf (13) geschaltet und über eine erste und eine zweite Fluidleitung (20,22) mit dem Speicher (19) verbunden ist.

4. Die Ansauglufttemperiereinrichtung (18) nach einem der vorhergehenden Ansprüche, mit einem Speicher-Kreislauf (66), umfassend den Speicher (19), eine zwischen die erste (20) und die zweite Fluidleitung (22) geschaltete dritte Fluidleitung (26), sowie Abschnitte der ersten (20) und der zweiten (22) Fluidleitung vom Speicher (19) bis zur dritten Fluidleitung (26), wobei ein Luft-Fluid-Wärmetauscher (27) einerseits in den Speicher-Kreislauf (66) und andererseits in eine von einem Verdichter (4) abzweigende Luftleitung (34) geschaltet ist.

5. Die Ansauglufttemperiereinrichtung (18) nach Anspruch 4, wobei mindestens ein weiterer Wärmetauscher (30,32) zur Abkühlung der Luft in die Luftleitung (34) in Strömungsrichtung der Luft primärseitig vor den Luft-Fluid-Wärmetauscher (27) geschaltet ist.

6. Die Ansauglufttemperiereinrichtung (18) nach Anspruch 5, wobei ein Druckreduzierventil (35) zwischen den mindestens einen weiteren Wärmetauscher (30,32) und den Luft-Fluid-Wärmetauscher (27) in die Luftleitung (34) geschaltet ist.

7. Die Ansauglufttemperiereinrichtung (18) nach Anspruch 5, wobei eine Luftentspannungsturbine (36) zwischen den weiteren Wärmetauscher (30,32) und den Luft-Fluid-Wärmetauscher (27) in die Luftleitung (34) geschaltet ist.

8. Die Ansauglufttemperiereinrichtung (18) nach einem der vorhergehenden Ansprüche, wobei das Fluid zur Wärmeübertragung Wasser und ein Gefrierschutzmittel enthält.

9. Gasturbinenanlage (1) mit einer Ansauglufttemperiereinrichtung (18) nach einem der vorhergehenden Ansprüche.

10. Gas- und Dampfturbinenanlage (38) mit einer Ansauglufttemperiereinrichtung (18) nach einem der Ansprüche 1 bis 8.

11. Ein Verfahren zum Betrieb einer Ansauglufttemperiereinrichtung (18) mit einem Ansaugluft-Vorwärmsystem (2), **dadurch gekennzeichnet, dass** ein Fluid zur Wärmeübertragung aus einem Speicher (19) ausgespeichert und dem Ansaugluft-Vorwärmsystem (2) zur Änderung der Temperatur einer Ansaugluft zugeführt wird.

12. Das Verfahren nach Anspruch 11, wobei komprimierte Verdichterluft im Wärmetausch mit Wasser abgekühlt wird.

13. Das Verfahren nach Anspruch 12, wobei eine Drossel (35) die abgekühlte Verdichterluft entspannt.

14. Das Verfahren nach Anspruch 12, wobei eine Entspannungsturbine (36) die Verdichterluft entspannt.

15. Das Verfahren nach einem der Ansprüche 13 oder 14, wobei entspannte Verdichterluft im Wärmetausch das Fluid kühlt.
